# EUROPEAN PATENT APPLICATION

(11) **EP 1 160 686 A2**
(43) Date of publication of application: **05.12.2001**
(21) Application number: 01112245.4
(22) Date of filing: 18.05.2001
(51) Int. Cl.: G06F 17/30

(54) **A method of searching the internet and an internet search engine**

(30) Priority: 30.05.2000 GB 0013119
(71) Applicant: GODADO.COM LTD., London EC4V 6LB (GB)
(72) Inventor: Riva, Frederico, c/o Godado.com Ltd., London EC4V 6LB (GB)
(74) Representative: Meddle, Alan Leonard

(57) **Abstract**

A method of searching the Internet to provide links to web sites in response to a search signification received from an enquirer comprises providing a thesaurus database in which significations are arranged in categories and sub-categories of meaning. Upon receipt of a search signification, a search is conducted for web sites having a textual match with the search signification. In addition, the thesaurus database is searched to determined the category of meaning to which the search signification belongs and the meaning of the search signification thus determined is used to identify related significations having a correlation with the meaning of the search signification. The enquirer is then provided with a list of web sites having a textual match with the search signification and with a list of related significations as a suggestion for supplementary research. An Internet search engine employing the methodology of the invention is also described.

## Description

THIS INVENTION relates to improvements in or relating to the searching of the Internet to locate web sites which are relevant to a search signification specified by an enquirer.

Currently there are two methods of searching the Internet to locate web sites which are relevant to a search word or expression, herein called a search signification, specified by an enquirer. One known method employs a search engine in the form of a directory of web sites which is organised into a rigid structure of categories which is filled in manually by surfing the net. The structure of such a directory type of search engine is "top-down" with a series of increasingly narrow categories, such as: Internet>online media>newspaper. Each of the categories contains links to relevant web sites and references to one or more relevant narrower categories. The search strategy applied to the search signification is text matching of the search signification with the web pages within the relevant series of categories, the enquirer being presented with a list of links to the web pages having text containing the search signification.

Another known method of searching the Internet uses a search engine having a database which is compiled by scanning the web and indexing the content of each web site. Again, the search is conducted by text matching. Thus, when an enquirer requests a search based on a specified search signification, this search engine looks at its database and presents the enquirer with a list of the web pages containing the search signification.

There are many different languages used in the different countries of the world and, to date, search engines have attempted to accommodate this situation by creating localised versions of the search engine in the official language of a particular country. Currently, a web site owner wishing to register with several different localised versions of the search engine has to register with each version of the search engine, supplying a translation of the keywords relevant to the web site. The owner of the web site therefore has to do all the work.

It is an object of the present invention to provide a method of searching the Internet and a search engine employing this method which provides an enquirer with a more comprehensive search.

Accordingly, in one aspect, the invention provides a method of searching the Internet to provide links to web sites in response to a search signification received from an enquirer, which method comprises providing a thesaurus database in which significations are arranged in categories and sub-categories of meaning, responding to the receipt of a search signification by conducting a search for web sites having a textual match with the search signification, searching the thesaurus database to determine the category of meaning to which the search signification belongs, using the meaning of the search signification thus determined to identify related significations having a correlation with the meaning of the search signification and providing the enquirer with a list of web sites having a textual match and with a list of related significations as a suggestion for supplementary research.

Conveniently, the thesaurus database has a hierarchical structure of categories and sub-categories of meaning and correlations between meanings and the searching for related significations comprises identifying a primary category of meaning to which the search signification belongs, identifying at least one related category of meaning having a correlation with the primary category of meaning, extracting from the identified primary and related categories of meaning and sub-categories thereof the related significations which have a correlation with the search signification and presenting the enquirer with a supplementary research list comprising the related significations thus determined.

Preferably, the supplementary research list includes the primary category of meaning to which the search signification belongs and/or the related categories of meaning.

In a preferred embodiment, the structure of the thesaurus database comprises a table of synonyms and the searching for related significations also includes searching for synonyms of the search signification.

Advantageously, a method embodying the invention further comprises providing the thesaurus database in a plurality of languages, determining in the language of the search signification the category of meaning to which a search signification in a first language belongs, translating the category of meaning in the first language into a corresponding category of meaning in a second language, searching the thesaurus database for related significations in the second language and providing the enquirer with a list of the related significations in the second language.

Desirably, the method comprises presenting the enquirer with the option of searching in one of plurality of languages different from the language of the search signification and translating the meaning of the search signification from the language of the search signification into the language selected by the enquirer.

In accordance with another aspect, the invention provides an Internet search engine for providing links to web sites in response to a search signification received from an enquirer, which search engine comprises a thesaurus database in which significations are arranged in categories and sub-categories of meaning, means responsive to receipt of a search signification for conducting a search for web sites having a textual match with the search significant, means for searching the thesaurus database to determine the category of meaning to which the search signification belongs, means for identifying from the meaning of the search signification thus determined related significations having a correlation with the meaning of the search signification and means for presenting the enquirer with a list of web sites having a textual match with the search significant and with a list of related significations as a suggestion for supplementary research.

Conveniently, the database has a hierarchical structure of categories and sub-categories of meaning and correlations between meanings and the means for searching for related significations comprises means for identifying a primary category of meaning to which the search signification belongs, means for identifying at least one other related category of meaning having a correlation with the primary category, and means for extracting from the identified primary and related categories of meaning and sub-categories thereof the related significations which have a correlation with the search signification, the enquirer being with a supplementary research list comprising the related significations thus identified.

Preferably, the means for extracting related significations produces a supplementary search list which includes the primary category of meaning to which the search significant belongs and /or the related category or categories of meaning.

Advantageously, the thesaurus database contains a plurality of versions of the database each in a respective one of plurality of languages, the search engine comprising means for determining in the language of the search signification the category of meaning to which a search signification in a first language belongs, means for translating the category of meaning of the search signification from the first language into a corresponding category of meaning in a second language, means for searching the thesaurus database for related significations in the second language and providing the enquirer with a list of the related significations in the second language.

Desirably, the search engine comprises means for presenting the enquirer with the option of searching in one of plurality of languages different from the language of the search signification, the translating means translating the meaning of the search signification from the language of the search signification into the language selected by the enquirer.

In a further aspect, the invention provides an Internet search engine for providing links to web sites in response to a search signification received from an enquirer, which search engine comprises a thesaurus database in which significations are arranged in categories and sub-categories of meaning, the thesaurus database contains a plurality of versions of the database each in a respective one of plurality of languages, the search engine comprising means for determining, in the language of the search signification, the category of meaning to which a search signification in a first language belongs, means for translating the category of meaning of the search signification from the first language into a corresponding category of meaning in a second language, means for searching the thesaurus database for related significations in the second language and means for presenting the enquirer with a list of the related significations in the second language.

In yet another aspect, the invention provides a method of searching the Internet to provide links to web sites in response to a search signification received from an enquirer, which method comprises providing a thesaurus database in which significations are arranged in categories and sub-categories of meaning, the database being provided in a plurality of languages, determining in the language of the search signification the category of meaning to which a search signification in a first language belongs, translating the category of meaning in the first language into a corresponding category of meaning in a second language, searching the thesaurus database for related significations in the second language and presenting the enquirer with a list of the related significations in the second language.

In accordance with yet a further aspect, the invention provides a computer programme comprising computer programme code means adapted to perform the steps of the method of the present invention when said programme is run on computer.

In still another aspect, the invention provides a computer programme according to the present invention embodied on a computer readable medium.

In order that the invention may be more readily understood, an embodying thereof will now be described, by way of example, with reference to the accompanying drawings, in which:
Figure 1 is a schematic illustration of a search engine embodying the present invention;
Figure 2 illustrates the generating of related significations from a search signification received from an enquirer;
Figure 3 is a high level flow chart illustrating the daily maintenance of the thesaurus database of the search engine embodying the present invention;
Figure 4 is a flow chart illustrating the daily evolution of the thesaurus; and
Figure 5 is a flow chart illustrating the daily updating of correlations and translations tables within the database of the search engine.

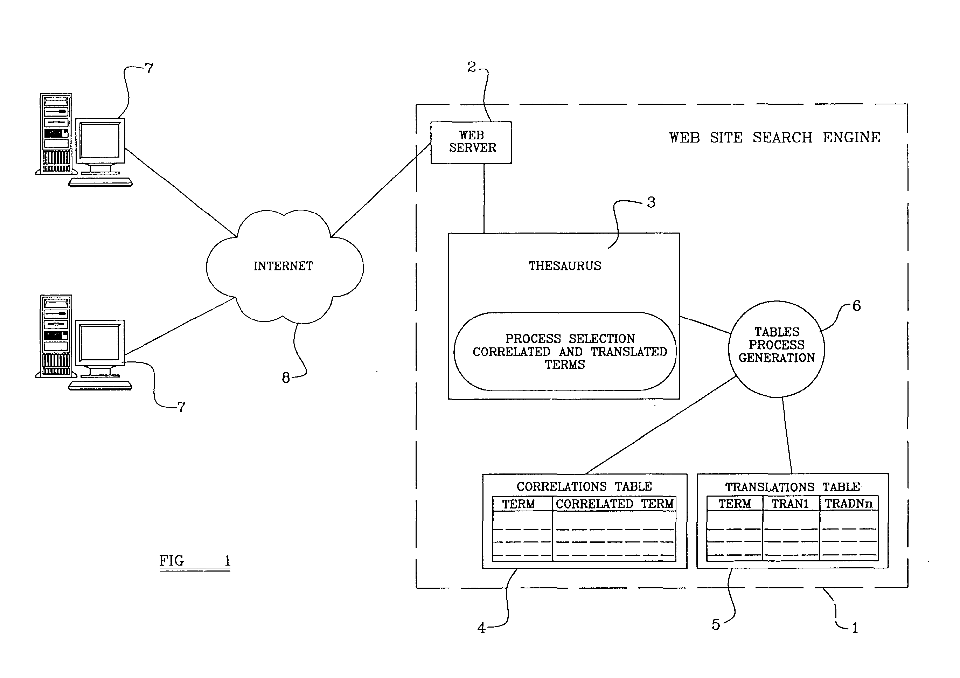

Referring firstly to Figure 1, a search engine 1 embodying the present invention comprises a web server 2 which communicates with a thesaurus database comprising a thesaurus 3 having access to a correlations table 4 and a translations table 5 via a process 6.

Users or enquirers 7 are able to communicate via the Internet 8 with the web server 2 of the search engine 1 in order to provide the search engine with a search signification in the form of a word or expression identifying a subject of interest to the enquirer. Based on the search signification received by the server 2 from an enquirer 7, the search engine 1 conducts searches and presents the results to the enquirer 7 via the Internet 8.

The search engine 1 conducts two searches in parallel. The first search is a text matching search to identify web pages containing the search signification, either as a content of the web page itself or as a chosen key word relevant to the web site. The search engine 1 then presents the enquirer 7 with links to the text matched web pages.

However, in addition, the search engine 1 carries out a second search based on the meaning of the search signification, the thesaurus 3 of the search engine 1 drawing a distinction between a signification and its meaning. Thus, a word or expression is a particular signification, whereas the enquirer 7 generally wishes to search for the meaning inherent in that particular signification. Clearly, different significations can have the same or very similar meaning. For example: "holidays" and "vacation" are different significations but with a similar meaning. In the second search based on the search signification, therefore, the search engine 1 uses the thesaurus database to establish the meaning of the particular search signification provided by the enquirer 7 within a meaning structure containing a hierarchy of categories and sub-categories of meaning, synonyms and correlations between meanings. Within the hierarchy of the meaning structure, significations are arranged in categories and sub-categories of meaning and correlated with both synonyms and other relevant meanings. In carrying out the search, the search engine 1 thus identifies a primary category of meaning to which the signification belongs and, using this information, then identifies at least one other relevant category of meaning having a correlation with the primary category of meaning already identified. The search engine then extracts from the primary and related meanings and sub-categories thereof, the meanings and significance relevant to the meaning of the search signification.

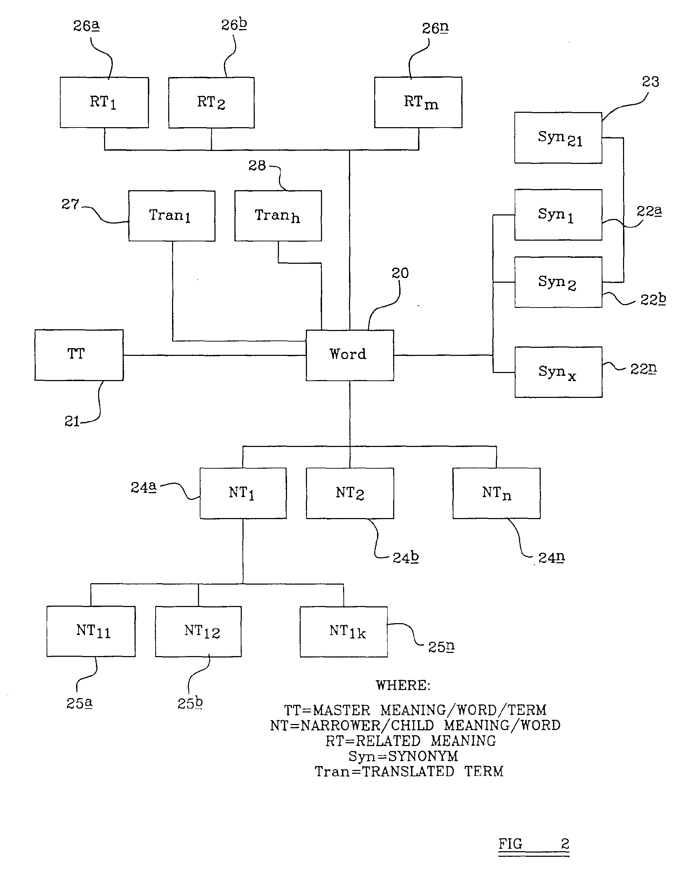

Figure 2 illustrates the way in which various related significations are generated from a search signification 20 received from an enquirer 7. The primary category of meaning 21 to which the search signification 20 belongs is determined from the thesaurus database. Synonyms 22a to 22n of the search signification 20 are determined together with possible further synonyms 23 of the synonyms 22a to 22n themselves. Sub-categories 24a to 24n of the primary category of meaning 21 are determined together with possible further sub-categories 25a to 25n of the sub-categories 24a to 24n themselves. Related categories of meaning 26a to 26n having a correlation with the primary category of meaning 21 are determined from the correlations table 4. A literal translation 27 of the search signification 20 into another language and a translation 28 of the primary category of meaning 21 into the other language are determined from the translations table 5. At least a selection of the resulting list of relevant significations is then presented to the enquirer 7 as a suggestion for further research. In selecting significations for the list, synonyms belonging to the same primary category of meaning as the search significant may be excluded.

For example, if a search signification in the form of the word "holidays" is received from an enquirer 7, the search engine 1 will identify a primary category of meaning to which the signification "holidays" belongs as the "entertainment" category. This primary category of meaning starts the list of related significations having a correlation with the search signification.

A search for synonyms of "holidays" will produce the signification "vacation" which, since it belongs to the same primary category as "holidays", is not added to the list.

The search engine also identifies some sub-categories of meaning that themselves belong to the category of "holiday", such as "honeymoon", "adventure holidays" and so on and these are added to the list

In addition, the search engine identifies some relevant sub-categories of the primary category which have a correlation with the search significant and are therefore of potential interest for the search. For example, the sub-category of "travelling", which also belongs to the category of "entertainment" but is a sub-category at the same level as the sub-category "holidays".

Finally, the search engine can identify some related categories of meaning which have a correlation with the primary category but are not within any of the categories already identified and may be of interest to the enquirer. For example, in the case of "holidays", the search will identify the categories of "sunglasses", "sportswear" and "airways" which do not belong to any of the previous categories of meaning but which have a clear correlation with the primary category of meaning of the search signification "holidays".

The results of this second search based on the meaning of the particular search signification provided by the enquirer are then displayed to the enquirer as a list of possible supplementary searches, as follows:

### ENTERTAINMENT, HONEYMOON, ADVENTURE HOLIDAYS, TRAVELLING, SUNGLASSES, SPORTSWEAR, AIRWAYS

The enquirer may then click on one of the suggested searches and the search engine will then both carry out a search for a textual match and present another suggested set of correlated search significations based on the new search signification selected by the enquirer.

In addition to making the described searches in the language in which the search signification is couched, the search engine 1 is also able to make the same search in other localised databases compiled in other languages. The search engine achieves this, not by literally translating the significant in the one language into another language, but by translating the meaning of the search signification in the one language into the other language. This is achieved by first determining in the one language the category of meaning to which the search signification belongs and using the equivalent category of meaning in the other language as a basis for suggesting correlated search significations in the other language.

It will be observed that the effect of the search engine 1 is to generalise the meaning of any search signification to the extent that three persons who, for example, are searching respectively for "table", "chair" and "wardrobe", all different items of furniture, will possibly be presented by different links as a result of the text matching search but will be provided with the same suggested supplementary research as a result of the meaning-based search.

The high level flow chart of Figure 3 shows the day-to-day maintenance of the thesaurus database of the search engine 1. As shown in Figure 3, the daily maintenance of the database is initiated at 30 in order to start the everyday evolution of the thesaurus at 31. This is followed by the daily creation of update correlation and translation files at 32 and finally by the updating of the correlation and translation tables 4 and 5 with new data at 33. The process then terminates at 34.

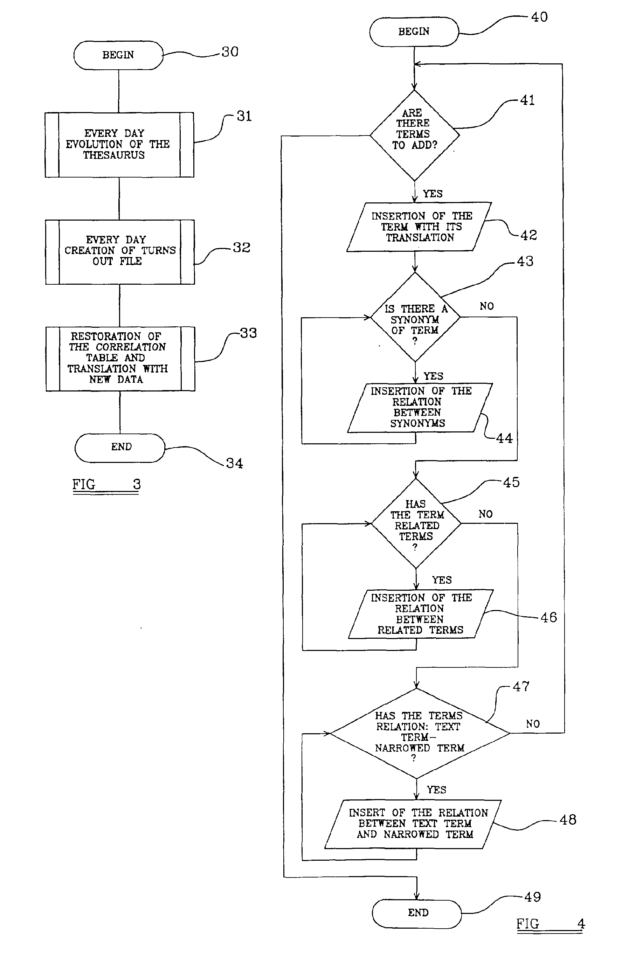

Referring now to Figure 4, the daily evolution of the thesaurus begins at 40 with the initiation of a decision step 41 which determines whether there is a new signification to add to the thesaurus. If there is signification to be added, the evolution proceeds to step 42 and the new signification is added to the database together with its translations into the other languages in which the database is maintained.

The procedure then goes to the decision step 43 which asks whether there is a synonym of the added significant. If so, the synonym relationship is added to the database in step 44 and the process returns to the input of step 43.

When there are no further synonym relations to be added, the evolution proceeds to the decision step 45 which asks whether the signification has related significations. If so, the relationship between the related significations is added to the database in step 46 and the process returns to the input of step 45.

When there are no further relationships between the added significations and related significations to be added to the database, the evolution proceeds to the decision 47 which asks whether there is a relationship between a narrower signification and the added signification. If so, the relationship between the added signification and the narrower signification is added to the database at 48 and the process returns to the input of step 47. When there are no further relationships between the added significations and narrower significations, the process returns to the input of step 41. The process repeats until there are no more significations to be added to the database, at which time the process goes directly to the end 49.

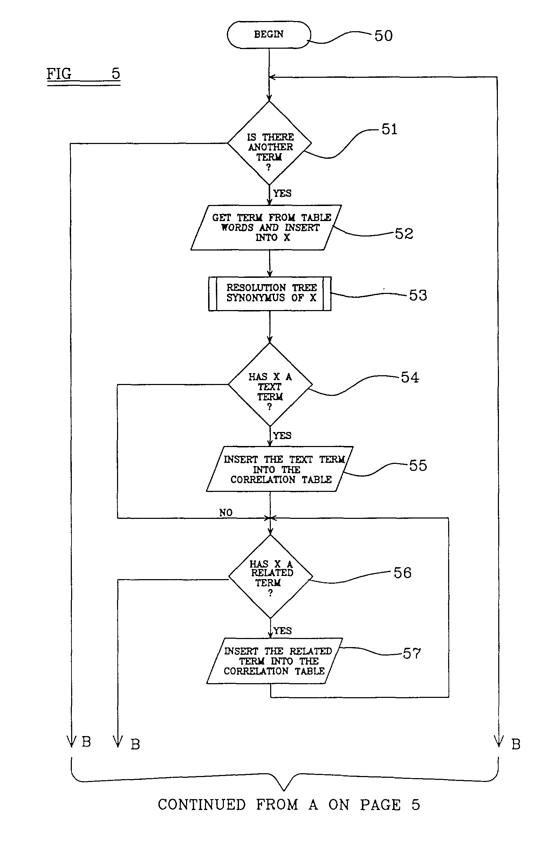

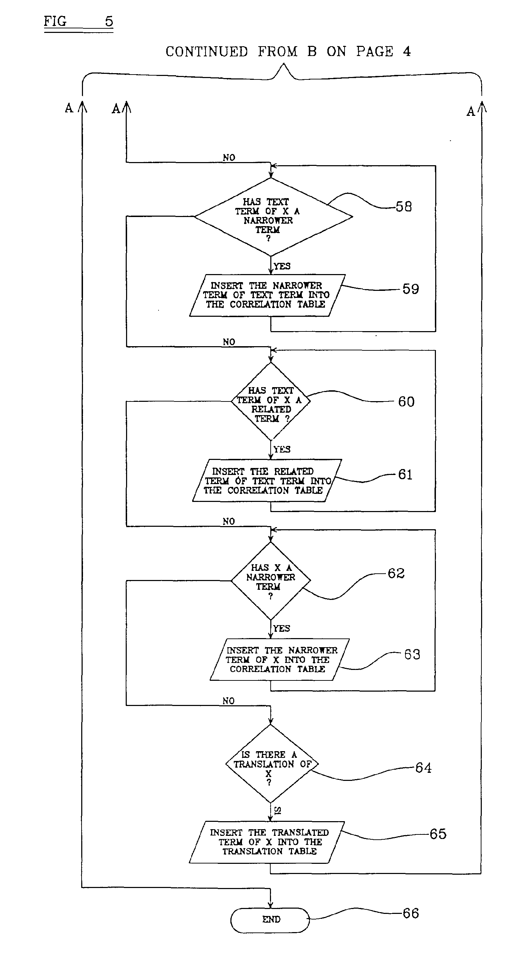

The daily creation of the correction files for the translation and correlation tables is indicated in Figure 5, the process beginning at 50 with the initiation of the decision step 51 which asks whether there is a signification to be added to the database. If so, the signification X is compared in steps 52 and 53 to determine whether it is synonymous with an existing category and the result is passed to decision step 54. If there is a synonym, then X is written into the correlation table at step 55 as a synonym and the process proceeds to step 56. If not, the process proceeds directly to step 56 which determines whether there are any significations which are related to X. If there is a related signification, this is inserted into the correlation table at step 57 and the process returns to the input of step 56. When there are no more related significations to be entered, the process moves to step 58 which determines whether there is a narrower signification within the meaning of the signification X. If so, the narrower term is inserted into the correlation table at step 59 and the process returns to the input of step 58. When there are no further narrower terms to be entered, the process proceeds to step 60 which determines whether the signification X has a related signification. If so, the related signification is inserted into the correlation table at step 61 and the process returns to the input of step 60. When there are no further significations related to the signification X, the process goes to step 62 which determines whether the added signification X has a narrower signification. If so, this is entered into the correlation table at step 63 and the process returns to the input of step 62. When there are no further narrower significations corresponding to the signification X, the process proceeds to step 63 which decides whether there is a translation of the added signification. If so, the translation is added to the translation table at step 65. The process then returns to the input of step 51. When there are no further categories to be added, the process goes directly from step 51 to end 66.

The described searching method and the updating process of the thesaurus database is implemented by means of respective computer programs having computer code means adapted to carry out each of the steps of the searching method and updating process.

It will be appreciated that the search method and search engine of the present invention is capable of having a considerable impact on the searching of the Internet, since, in contrast to known methods and search engines, there is a shift from searching purely on the search signification itself to searching on the basis of the meaning of the search signification. Furthermore, there is integration of different languages and the search engine is capable of conducting equivalent searches in different languages.

An enquirer will, therefore, be able to obtain a more meaningful search and will be prompted to pursue further lines of research which may move between different languages without any need for translation.

In contrast to other search engines, the refining of a search and its conduct in a language other than that of the search signification can be effected simply by the enquirer selecting the supplementary search significations presented in response to the original search signification.

Thus, a typical search with the search engine embodying the present invention might be as follows:
Inputting the search signification "vacation" results in a list of links to web pages providing a textual match with "vacation" and a set of suggested supplementary significations including "airways".
Clicking on "airways" results in the output of a list of links and suggested supplementary significations including "hotel".
Clicking on "hotel" results in the output of a list of links and suggested supplementary significations including "restaurant".
Clicking on "restaurant" results in a list of links, suggested supplementary significations and a link to a localised search engine with the Italian equivalent of "restaurant", namely "ristorante".
Clicking on "ristorante" results in the same search in Italian to obtain a list of Italian restaurants having a web site.

It will be seen from this example that the search engine embodying the present invention drives the search through relevant and correlated categories, making searching for something on the Internet much easier and intuitive, and without forcing the search into fixed and rigid categories as in the known directory-like search engines.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof

In one form of the search engine 1, where the searching is based on keywords, owners of a web site can bid for preferential ranking within a hierachy of web sites associated with that keyword: the higher the bid, the higher the ranking. This opens the possibility of a web site owner subscribing to only one local search engine 1, bidding for ranking within some relevant keywords and, provided that foreign language versions of the web site exist, the system then automatically looking after corresponding subscriptions in all the chosen language versions of the search engine, choosing the relevant keywords for that language. The web site thus appears in the local language version of the search engine and can reach potential foreign customers without having to register separately with all the local versions of the search engine, ranking pari-passu, depending on the keyword bid, with local competitors.

From the enquirer's point of view by accessing the local version of the search engine he will be able to access all of the content of the local language, regardless of the nationality of the company with ranking for the relevant keyword and will not be forced to access foreign language search engines in the hope of finding web sites which have content translated into his own language. Moreover, if the surfer knows other languages, he will be able to access other local versions of the search engine with the assurance that he can start from where he left the engine he was using and be sure to find the local content in the language of the local version now being accessed.

## Claims

1. A method of searching the Internet to provide links to web sites in response to a search signification received from an enquirer, which method comprises providing a thesaurus database in which significations are arranged in categories and sub-categories of meaning, responding to the receipt of a search signification by conducting a search for web sites having a textual match with the search signification, searching the thesaurus database to determine the category of meaning to which the search signification belongs, using the meaning of the search signification thus determined to identify related significations having a correlation with the meaning of the search signification and providing the enquirer with a list of web sites having a textual match and with a list of related significations as a suggestion for supplementary research.

2. A method according to Claim 1, in which the database has a hierarchical structure of categories and sub-categories of meaning and correlations between meanings and the searching for related significations comprises identifying a primary category of meaning to which the search signification belongs, identifying at least one other related category of meaning having a correlation with the primary category, extracting from the identified primary and related categories of meaning and sub-categories thereof the related significations which have a correlation with the search signification and presenting the enquirer with a supplementary research list comprising the related significations thus determined.

3. A method according to Claim 2, in which the supplementary research list includes the primary category of meaning to which the search signification belongs and /or the related categories of meaning.

4. A method according to claim 2 or 3, in which the structure of the thesaurus database comprises a table of synonyms and the searching for related significations also includes searching for synonyms of the search signification.

5. A method according to any one of Claims 1 to 4, further comprising providing the thesaurus database in a plurality of languages, determining in the language of the search signification the category of meaning to which a search signification in a first language belongs, translating the category of meaning in the first language into a corresponding category of meaning in a second language, searching the thesaurus database for related significations in the second language and providing the enquirer with a list of the related significations in the second language.

6. A method according to Claim 5, comprising presenting the enquirer with the option of searching in one of plurality of languages different from the language of the search signification and translating the meaning of the search signification from the language of the search signification into the language selected by the enquirer.

7. An Internet search engine for providing links to web sites in response to a search signification received from an enquirer, which search engine comprises a thesaurus database in which significations are arranged in categories and sub-categories of meaning, means responsive to receipt of a search signification for conducting a search for web sites having a textual match with the search significant, means for searching the thesaurus database to determine the category of meaning to which the search signification belongs, means for identifying from the meaning of the search signification thus determined related significations having a correlation with the meaning of the search signification and means for presenting the enquirer with a list of web sites having a textual match with the search significant and with a list of related significations as a suggestion for supplementary research.

8. A search engine according to Claim 7, in which the database has a hierarchical structure of categories and sub-categories of meaning and correlations between meaning and the means for searching for related significations comprises means for identifying a primary category of meaning to which the search signification belongs, means for identifying at least one other related category of meaning having a correlation with the primary category, and means for extracting from the identified primary and related categories of meaning and sub-categories thereof the related significations which have a correlation with the search signification, the enquirer being presented with a supplementary research list comprising the related significations thus identified.

9. A search engine according to Claim 8, in which the means for extracting related significations produces a supplementary search list which includes the primary category of meaning to which the search significant belongs and /or the related categories of meaning.

10. A search engine according to any one of Claims 7 to 9, in which the thesaurus database contains a plurality of versions of the database each in a respective one of plurality of languages, the search engine comprising means for determining in the language of the search signification the category of meaning to which a search signification in a first language belongs, means for translating the category of meaning of the search signification from the first language into a corresponding category of meaning in a second language, means for searching the thesaurus database for related significations in the second language and providing the enquirer with a list of the related significations in the second language.

11. A search engine according to Claim 10, comprising means for presenting the enquirer with the option of searching in one of plurality of languages different from the language of the search signification, the translating means translating the meaning of the search signification from the language of the search signification into the language selected by the enquirer.

12. A method of searching the Internet to provide links to web sites in response to a search signification received from an enquirer, which method comprises providing a thesaurus database in which significations are arranged in categories and sub-categories of meaning, the database being provided in a plurality of languages, determining in the language of the search signification the category of meaning to which a search signification in a first language belongs, translating the category of meaning in the first language into a corresponding category of meaning in a second language, searching the thesaurus database for related significations in the second language and presenting the enquirer with a list of the related significations in the second language.

13. An Internet search engine for providing links to web sites in response to a search signification received from an enquirer, which search engine comprises a thesaurus database in which significations are arranged in categories and sub-categories of meaning, the thesaurus database contains a plurality of versions of the database each in a respective one of plurality of languages, the search engine comprising means for determining, in the language of the search signification, the category of meaning to which a search signification in a first language belongs, means for translating the category of meaning of the search signification from the first language into a corresponding category of meaning in a second language, means for searching the thesaurus database for related significations in the second language and means for presenting the enquirer with a list of the significations in the second language.

14. A computer program comprising computer program code means adapted to perform the steps of any one of Claims 1 to 6 and 12 when said program is run on a computer.

15. A computer program as claimed in Claim 14 embodied on a computer readable medium.
